# EUROPÄISCHE PATENTSCHRIFT

(11) **EP 1 771 672 B1**
(45) Veröffentlichungstag und Bekanntmachung des Hinweises auf die Patenterteilung: **12.05.2010**
(21) Anmeldenummer: 05770721.8
(22) Anmeldetag: 08.07.2005
(51) Int. Cl.: F16H 25/22, F16C 33/38, F16C 29/06

(54) **KUGELGEWINDETRIEB**
BALL SCREW
VIS A BILLES

(30) Priorität: 30.07.2004 DE 102004037123
(43) Veröffentlichungstag der Anmeldung: 11.04.2007
(73) Patentinhaber: Schaeffler Technologies GmbH & Co. KG, 91074 Herzogenaurach (DE)
(72) Erfinder: OSTERLAENGER, Jürgen, 91448 Emskirchen (DE); ADLER, Dieter, 91074 Herzogenaurach (DE); KRAUS, Manfred, 91074 Herzogenaurach (DE); MAYER, Ralf, 91074 Herzogenaurach (DE); WAGNER, Jörg, 91097 Oberreichenbach (DE); WALTER, Jean, F-67500 Haguenau (FR); RUDY, Dietmar, 66501 Kleinbundenbach (DE)
(86) Internationale Anmeldenummer: PCT/EP2005/007392
(87) Internationale Veröffentlichungsnummer: WO 2006/012970

(56) Entgegenhaltungen:
- EP-A- 0 890 755
- EP-A- 0 961 045
- EP-A- 1 387 098
- WO-A-03/072966
- DE-A1- 10 044 447
- DE-A1- 10 329 098
- US-A- 5 615 955
- US-A1- 2003 231 812

## Beschreibung

Die vorliegende Erfindung betrifft einen Kugelgewindetrieb. Derartige Kugelgewindetriebe wandeln eine drehende in eine lineare Bewegung um.

Aus der gattungsgemäßen DE 100 44 447 A1 beispielsweise ist ein Kugelgewindetrieb bekannt geworden, mit einer Kugelrollspindel und einer darauf angeordneten Spindelmutter. Kugeln sind in einem von schraubenförmig gewundenen Kugelrillen der Kugelrollspindel und der Spindelmutter begrenzten endlosen Kugelkanal endlos umlauffähig angeordnet. Der Kugelkanal weist einen um die Kugelrollspindel gewundenen Lastabschnitt auf, dessen Anfang und Ende durch einen lastfreien Rückführungsabschnitt endlos miteinander verbunden sind. Zwei Kugeln sind in einem gemeinsamen Kugelkäfig aufgenommen, dessen Käfigtaschen jeweils eine der Kugeln aufnehmen. Der Kugelkäfig besteht aus einem flachen scheibenförmigen Grundkörper mit ovaler Außenkontur, in dem zwei kreisrunde Ausnehmungen die Taschen für die Kugeln bilden. Die Taschenwände sind leicht konkav gewölbt und umschließen einen Teil des Kugelumfangs zu beiden Seiten einer Äquatorialebene, so dass die Kugeln verliersicher in diesen Taschen gehalten sind. Aufgrund des geringen Umgriffs mittels der konkaven Taschenwände stellte sich ein ausgeprägter Durchhang der Kugeln in diesen Käfigtaschen ein. Dieser Durchhang - oder auch Taschenspiel - könnte dadurch reduziert werden, dass der Kugelkäfig und damit der Kugelumgriff dicker ausgeführt wird. Jedoch bringen dicker ausgeführte Kugelkäfige andere Nachteile mit sich: Der Kugelkäfig erstreckt sich entlang des Kugelkanals. In dieser Erstreckungsrichtung weist der Kugelkäfig Stege auf, die parallel zu den Kugelrillen, aber außerhalb dieser Kugelrillen angeordnet sind. Der radiale Abstand zwischen dem Außenumfang der Kugelrollspindel und dem Innenumfang der Spindelmutter muss mindestens so groß wie die Dicke dieses Steges ausgebildet sein, damit der Kugelgewindetrieb funktionsfähig ist. Wenn der Kugelkäfig dicker ausgebildet wird, also wenn auch der Steg dicker ist, hat dies zwangsweise zur Folge, dass dieser radiale Abstand zunimmt. Der Kugelgewindetrieb baut dann größer. Ein weiteres Problem stellt sich im Bereich des Rückführungsabschnittes ein. Im Rückführungsabschnitt ist üblicherweise eine Nut vorgesehen, in der dieser Steg läuft. Wenn dieser Steg nun dicker ausgeführt ist, muss zwangsläufig auch die Nut und somit der Rückführungsabschnitt größer gestaltet werden.

Aufgabe der vorliegenden Erfindung ist es, einen Kugelgewindetrieb nach den Merkmalen des Oberbegriffs des Anspruchs 1 anzugeben, bei dem der Kugeldurchhang im Kugelkäfig reduziert ist, ohne dass die beschriebenen Nachteile eintreten.

Erfindungsgemäß wird diese Aufgabe dadurch gelöst, dass der Kugelkäfig an seinen axialen Enden und zwischen einander benachbarten Kugeln jeweils mit einem in die Kugelrillen eingreifenden, und an seinen den Kugeln zugewandten Seiten mit einer konkaven Aufnahme für die Kugeln versehenen Teller aufweist. Bei diesem erfindungsgemäßen Kugelgewindetrieb tauschen demzufolge diese Teller in den Kugelrillenquerschnitt ein. Somit ist der Kugelumgriff deutlich erhöht. Der Kugeldurchhang ist infolge des vergrößerten Kugelumgriffs gleichzeitig erheblich reduziert. Der radiale Abstand zwischen dem Außenumfang der Kugelrollspindel und dem Innenumfang der Spindelmuttern bleibt unberührt, da der Käfigsteg in seiner Dicke ebenfalls unverändert bleiben kann.

Vorzugsweise sind jeweils zwei Kugeln in einem Kugelkäfig angeordnet. Die Erfindung eignet sich jedoch ebenfalls in günstiger Weise für Kugelkäfige mit höchstens vier Taschen, in denen jeweils eine Kugel verliersicher aufgenommen ist.

Im Kugelgewindetrieb sind eine Vielzahl derartiger Kugelkäfige hintereinander in einer Reihe angeordnet. Um sicherzustellen, dass einander berührende Kugelkäfige nicht verhaken können, sieht eine erfindungsgemäße Weiterbildung vor, dass die jeweils an den Enden des Kugelkäfigs liegenden Teller an ihren voneinander abgewandten Seiten als konvex geformte Puffer ausgebildet sind. Demzufolge weisen zwei einander benachbart angeordnete Kugelkäfige an ihren einander zugewandten Seiten beide diese konvexen Puffer auf, die ein verhakelungsfreies Durchlaufen durch den Kugelkanal gewährleisten.

Während eines vollständigen Umlaufs der Kugelkäfige durch den Kugelkanal stellen sich Schwenkbewegungen zwischen einander benachbart angeordneten Kugelkäfigen ein. Die konvexen Puffer der beiden Kugelkäfige berühren sich etwa punktförmig. Dieser Kontaktpunkt der beiden Puffer wandert in Abhängigkeit von einer Schwenklage der beiden Kugelkäfige zueinander entlang der konvexen Pufferfläche. Diese konvexen Puffer sind so aufeinander abgestimmt, dass ein verhakelungsfreies Durchlaufen durch den Kugelkanal gewährleistet ist. Die Puffer können zusätzlich derart aufeinander abgestimmt sein, so dass während des Wanderns des Kontaktpunktes keine oder nur eine vernachlässigbare Relativverschiebung in Richtung des Kugelkanals zwischen den zwei Kugelkäfigen erfolgt.

Der bereits erwähnte Steg ist zu wenigstens einer Längsseite des Kugelkäfigs angeordnet, wobei alle Teller mittels des Stegs verbunden sind. Vorzugsweise sind derartige Kugelkäfige aus Kunststoff im Spritzverfahren hergestellt. Der Kunststoff kann vorzugsweise flexibel, weich, reibungsarm und geräuschgedämpft ausgeführt sein. Wenn lediglich ein Steg vorgesehen ist, können die Taschen offen ausgeführt sein und der Kugelkäfig wird noch flexibler. D. h. die Kugeln sind nicht über einen vollständigen Äquatorumfang umschlossen. Allerdings können auch zwei Stege vorgesehen sein, wobei der andere Steg zur anderen Längsseite angeordnet ist. In diesem Fall sind die Kugeln am Äquator vollständig umschlossen.

Nach einer anderen erfindungsgemäßen Weiterbildung kann der Steg an voneinander abgewandten Seiten jeweils mit einem Führungsnocken zur Führung des Kugelkäfigs versehen sein, wobei die eine Seite nach radial außen der Spindelmutter und die andere Seite nach radial innen der Kugelrollenspindel zugeordnet ist. Diese Führungsnocken bekommen insbesondere im Rückführungsabschnitt Bedeutung. Im Rückführungsabschnitt laufen die Kugeln lastfrei um. Die Kugeln können daher im Rückführungsabschnitt an den Rückführungsabschnitt begrenzende Wände anschlagen und unerwünschte Geräusche verursachen. Diese Geräusche können nun dadurch verhindert werden, dass einerseits durch die erfindungsgemäßen Teller der Kugeldurchhang erheblich reduziert ist, und andererseits dadurch, dass der Rückführungsabschnitt mit Führungsflächen zur Führung dieses Käfigsteges versehen ist. Im Rückführungsabschnitt kann auf diese Weise sichergestellt werden, dass der Kugelkäfig ausschließlich an diesen Führungsflächen geführt ist. Demzufolge können die Kugeln trotz eines geringen Durchhangs im Kugelkäfig nicht an den Rückführungsabschnitt begrenzende Wände anschlagen, sondern ohne Berührung mit den Wänden den Rückführungsabschnitt passieren.

Diese Führungsflächen können in zweckmäßiger Weise an einander zugewandten Nutwänden einer Führungsnut ausgebildet sein.

Zur Reduzierung von Reibung zwischen den Kugeln und dem Kugelkäfig kann zwischen zwei Kugeln eines Kugelkäfigs ein Wälzkörper angeordnet sein, der in Wälzkontakt mit den beiden Kugeln steht. Vorzugsweise liegt die Drehachse dieses zwischengeschalteten Wälzkörpers in einer gemeinsamen Ebene mit den Drehachsen der Kugeln.

Nachstehend wird die Erfindung anhand von drei in insgesamt elf Figuren abgebildeten Ausführungsbeispielen näher erläutert. Es zeigen:
- Figur 1: einen Teilquerschnitt durch einen erfindungsgemäßen Ku- gelgewindetrieb,
- Figur 2: in Kugelkäfigen angeordnete Kugeln des erfindungsgemä- ßen Kugelgewindetriebes,
- Figur 3: die in Figur 2 abgebildeten Kugelkäfige im Rückführungs- abschnitt des erfindungsgemäßen Kugelgewindetriebes,
- Figur 4: eine Ansicht des in Figur 3 abgebildeten Rückführungsab- schnitts,
- Figur 5: einen einzelnen Kugelkäfig des erfindungsgemäßen Ku- gelgewindetriebs in perspektivischer Darstellung,
- Figur 6: den Kugelkäfig aus Figur 5 im Längsschnitt,
- Figur 7: den Kugelkäfig gemäß Figur 5 in einem weiteren Längs- schnitt,
- Figur8: einen modifizierten Kugelkäfig eines weiteren erfindungs- gemäßen Kugelgewindetriebes in perspektivischer Darstel- lung,
- Figur 9: einen Teillängsschnitt durch den Rückführungsabschnitt gemäß Figur 3 in perspektivischer Darstellung,
- Figur 10: eine Draufsicht auf den Längsschnitt gemäß Figur 9 und
- Figur 11: einen Teillängsschnitt im Rückführungsabschnitt eines wei- teren erfindungsgemäßen Kugelgewindetriebes

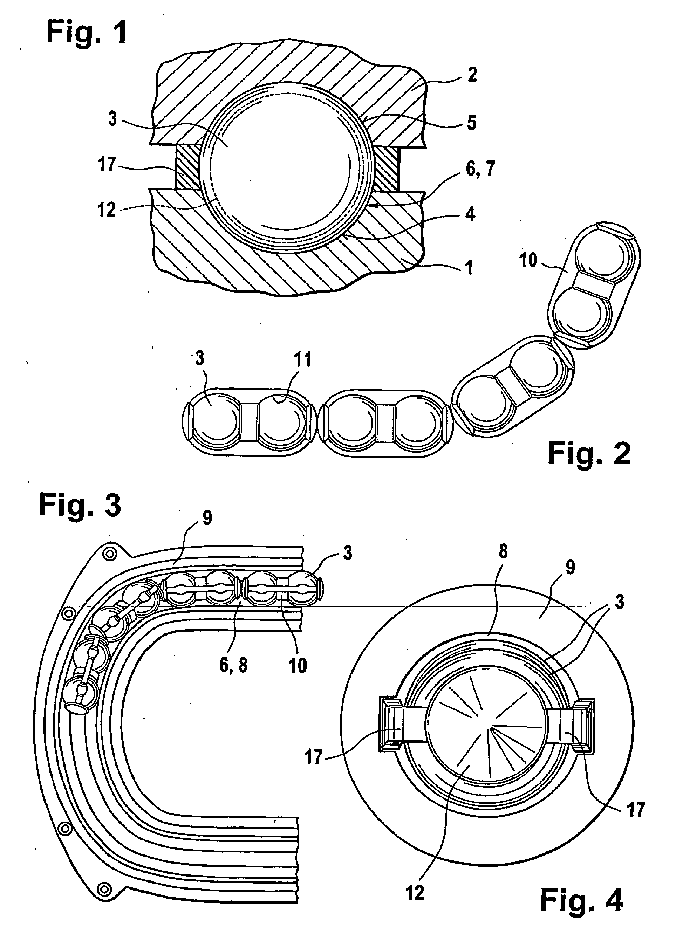

Der in den Figuren 1 bis 7 und Figuren 9 und 10 abgebildete erfindungsgemäße Kugelgewindetrieb weist eine Kugelrollspindel 1 und eine darauf drehbar angeordnete Spindelmutter 2 auf. Kugeln 3 sind in einem von Kugelrillen 4, 5 begrenzten endlosen Kugelkanal 6 endlos umlauffähig angeordnet. Der Kugelkanal 6 weist einen um die Kugelrollspindel 1 gewundenen Lastabschnitt 7 auf, in dem die Kugeln 3 an den Kugelrillen 4, 5 unter Last abwälzbar angeordnet sind. Anfang und Ende des Lastabschnittes 7 sind durch einen lastfreien Rückführungsabschnitt 8 endlos miteinander verbunden. Der Rückführungsabschnitt 8 ist hier an einem längs geteilten Rohr 9 ausgebildet, dessen eine Hälfte in Figur 3 abgebildet ist. Ferner sind eine Vielzahl im Kugelkanal 6 hintereinander angeordneter Kugelkäfige 10 vorgesehen. In jedem Kugelkäfig 10 sind zwei Kugeln 3 in Käfigtaschen 11 verliersicher aufgenommen. Mehrere dieser hintereinander angeordneten Kugelkäfige 10 sind in Figur 2 abgebildet.

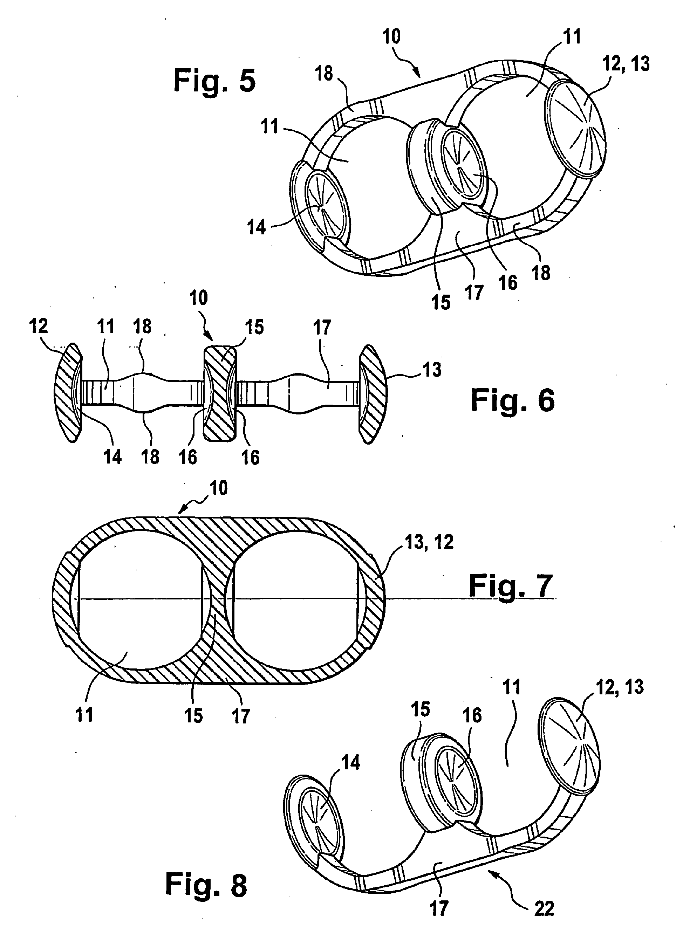

Figur 5 zeigt in perspektivischer Darstellung einen dieser Kugelkäfige 10. Der Kugelkäfig 10 weist an seinen beiden axialen Enden jeweils einen Teller 12 auf. Diese beiden Teller 12 sind an ihren voneinander abgewandten Seiten konvex gewölbt und bilden Puffer 13. Einander zugewandte Seiten dieser Teller 12 sind konkav gewölbt und bilden Aufnahmen 14 für die Kugeln 3. Die Teller 12 umschließen mit ihren Aufnahmen 14 einen Teil des Kugelumfangs zu beiden Seiten einer Äquatorebene, so dass die Kugeln 3 in den Käfigtaschen 11 mit geringem Spiel verliersicher gehalten sind. Zwischen den beiden Käfigtaschen 11 des Kugelkäfigs 10 ist ein weiterer Teller 15 angeordnet. Den Tellern 12 zugewandte Seiten des Tellers 15 sind ebenfalls konkav gewölbt und bilden Aufnahmen 16 für die Kugeln 3.

Die Puffer und die Aufnahmen sind besonders deutlich in Figur 6 zu erkennen.

Beide Längsseiten des Kugelkäfigs 10 sind durch Stege 17 gebildet, die die Teller 12, 15 miteinander verbinden. Der Kugelkäfig 10 ist vorliegend aus Kunststoff im Spritzverfahren hergestellt, wobei die Stege 17 und die Teller 12, 15 einstückig miteinander verbunden sind.

Der Figur 1 kann entnommen werden, dass die Teller - hier Teller 12 - den größten Teil des Kugelkanals 6 ausfüllen. Die Teller 12, 15 greifen somit in die Kugelrillen 4, 5 der Kugelrollspindel 1 und der Spindelmutter 2 ein. Der Figur 1 kann ferner entnommen werden, dass die Stege 17 im Vergleich zu den Tellern 12, 15 sehr flach bauend ausgeführt sind. Der Kugelkäfig 10 ist im Lastabschnitt 7 über die Stege 17 am Innenumfang der Spindelmutter 2 und am Außenumfang der Kugelrollspindel 1 geführt.

Den Figuren 3, 5, 6 kann entnommen werden, dass jeder Steg 17 an voneinander abgewandten Stegseiten mit jeweils zwei Führungsnocken 18 versehen ist. Diese Führungsnocken 18 dienen der Führung des Kugelkäfigs 10 im Kugelkanal 6. Den Führungsnocken 18 kommt besondere Bedeutung im Rückführungsabschnitt 8 zu.

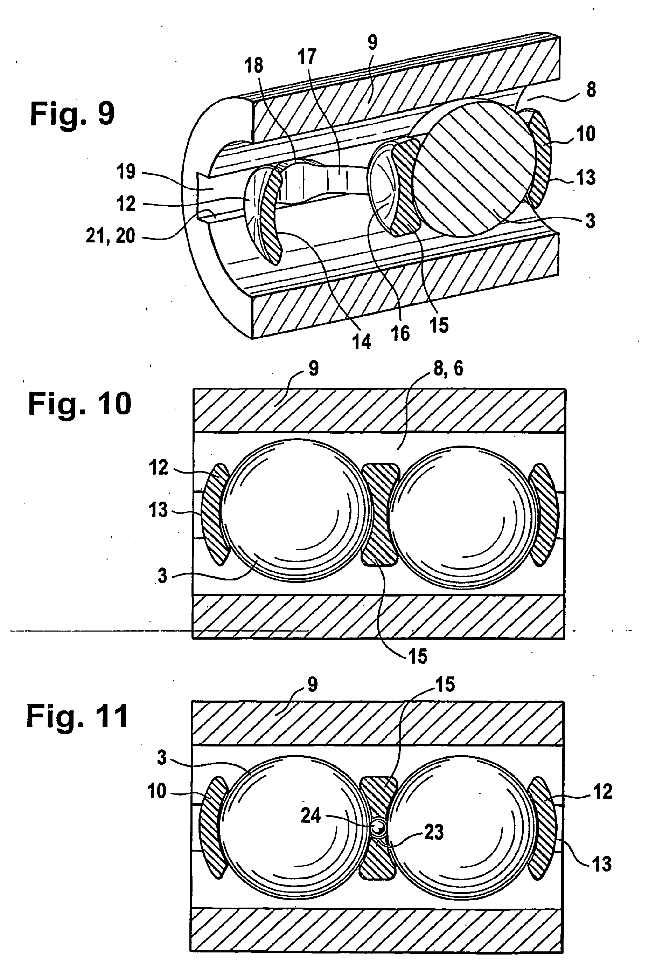

Figur 9 zeigt in perspektivischer Darstellung einen Teilschnitt durch den Rückführungsabschnitt 8. Im Rückführungsabschnitt 8 sind zwei Führungsnuten 19 ausgebildet, von denen eine abgebildet ist. Einander zugewandte Nutwände 20 der Führungsnut 19 bilden Führungsflächen 21 für den Kugelkäfig 10. Der Figur 9 ist zu entnehmen, dass der Steg 17 mit seinen Führungsnocken 18 in die Führungsnut 19 eingreift. Die Führungsnocken 18 kommen zur Anlage an die Führungsflächen 21 der Führungsnut 19. Im Rückführungsabschnitt 8 wird der Kugelkäfig 10 einwandfrei geführt. Der Kugelkanal 6 ist innerhalb des Rückführungsabschnittes 8 mit einem so großen Durchmesser versehen, dass die Kugeln 3 außer Kontakt mit dem Rohr 9 sind. Das Umschließen der Kugeln 3 mit den Aufnahmen 14, 16 der Teller 12, 15 über einen großen Kugelumfangsabschnitt gewährleistet ein nur geringes Spiel oder Kugeldurchhang im Kugelkäfig 10. Auf diese Weise sind Klappergeräusche im Bereich des Rückführungsabschnittes aufgrund von ausbleibendem Anschlagen der Kugeln gegen die Wände des Rückführungsabschnitts ausgeschlossen.

Figur 8 zeigt einen modifizierten Kugelkäfig 22. Dieser unterscheidet sich von dem weiter oben beschriebenen Kugelkäfig lediglich dadurch, dass statt zwei Stegen nur ein Steg 17 ausgebildet ist. Demzufolge genügt es, im Rückführungsabschnitt 8 nur eine Führungsnut 19 auszubilden.

Der Figur 10 kann entnommen werden, dass im Rückführungsabschnitt 8 die Kugel 3 mit Abstand zu der Rohrwand angeordnet sind, die den Kugelkanal 6 im Bereich des Rückführungsabschnittes begrenzen.

Figur 11 zeigt in einem Längsschnitt wie in Figur 10 einen Ausschnitt eines weiteren erfindungsgemäßen Kugelgewindetriebes. Im Unterschied zu dem zuvor beschriebenen erfindungsgemäßen Kugelgewindetrieb ist hier der Teller 15 mit einer Tasche 23 versehen, in der ein Wälzkörper 24 drehbar angeordnet ist. Dieser Wälzkörper 24 steht in Wälzkontakt mit den beiden benachbarten Kugeln 3. Die Drehachsen der Kugeln 3 und des Wälzkörpers 24 liegen in einer gemeinsamen Ebene. Auf diese Weise ist die Gleitreibung der Kugeln 3 mit dem Kugelkäfig 10 reduziert.

### Bezugszahlen

- 1: Kugelrollspindel
- 2: Spindelmutter
- 3: Kugel
- 4: Kugelrille
- 5: Kugelrille
- 6: Kugelkanal
- 7: Lastabschnitt
- 8: Rückführungsabschnitt
- 9: Rohr
- 10: Kugelkäfig
- 11: Käfigtasche
- 12: Teller
- 13: Puffer
- 14: Aufnahme
- 15: Teller
- 16: Aufnahme
- 17: Steg
- 18: Führungsnocken 19 Führungsnut
- 20: Führungswand
- 21: Führungsfläche
- 22: Kugelkäfig
- 23: Tasche
- 24: Wälzkörper

## Patentansprüche

1. Kugelgewindetrieb, mit einer Kugelrollspindel (1) und einer darauf angeordneten Spindelmutter (2), wobei Kugeln (3) in einem von Kugelrillen (4, 5) der Kugelrollspindel (1) und der Spindelmutter (2) begrenzten endlosen Kugelkanal (6) endlos umlauffähig angeordnet sind, wobei der Kugelkanal (6) einen um die Kugelrollspindel (1) gewundenen Lastabschnitt (7) aufweist, dessen Anfang und Ende durch einen lastfreien Rückführungsabschnitt (8) endlos miteinander verbunden sind, wobei jeweils mindestens zwei und höchstens vier Kugeln (3) in einem gemeinsamen Kugelkäfig (10, 22) aufgenommen sind, dessen Käfigtaschen (11) jeweils eine der Kugeln (3) aufnehmen, wobei eine Vielzahl derartiger Kugelkäfige hintereinander in Reihe angeordnet sind, **dadurch gekennzeichnet, dass** der Kugelkäfig (10, 22) an seinen axialen Enden und zwischen einander benachbarten Kugeln (3) jeweils einen in die Kugelrillen (4, 5) eingreifenden, und an seinen den Kugeln (3) zugewandten Seiten mit einer konkaven Aufnahme (14) für die Kugeln (3) versehenen Teller (12, 15) aufweist, wobei die beiden Teller (12, 15) an den Enden des Kugelkäfigs (10, 22) an ihren voneinander abgewandten Seiten als konvex geformte Puffer (13) ausgebildet sind.

2. Kugelgewindetrieb nach Anspruch 1, bei dem zu wenigstens einer Längsseite des Kugelkäfigs (10, 22) ein Steg (17) angeordnet ist, der alle Teller (12, 15) miteinander verbindet.

3. Kugelgewindetrieb nach Anspruch 2, bei dem der Kugelkäfig (10, 22) aus Kunststoff im Spritzverfahren hergestellt ist.

4. Kugelgewindetrieb nach Anspruch 2, bei dem der Steg (17) an seinen voneinander abgewandten Seiten jeweils mit einem Führungsnocken (18) zur Führung des Kugelkäfigs (10, 22) versehen ist.

5. Kugelgewindetrieb nach Anspruch 2, bei dem die Spindelmutter (2) im Rückführungsabschnitt (8) längsseits der Kugelrillen (4, 5) mit Führungsflächen (21) zur Führung des Kugelkäfigs (10, 22) versehen sind, wobei der Käfigsteg (17) zwischen diesen Führungsflächen (21) angeordnet ist.

6. Kugelgewindetrieb nach Anspruch 5, bei dem die Führungsflächen (21) an einander zugewandten Nutwänden (20) einer Führungsnut (19) ausgebildet sind.

7. Kugelgewindetrieb nach Anspruch 5, bei dem im Rückführungsabschnitt (8) die Kugeln (3) in den Käfigtaschen (11) der Kugelkäfige (10, 22) gehalten und ohne Kontakt mit dem Kugelkanal (6) sind.

8. Kugelgewindetrieb nach Anspruch 1, bei dem zwischen einander benachbarten Kugeln (3) eines Kugelkäfigs (10, 22) ein Wälzkörper (24) angeordnet ist, der in Wälzkontakt mit den beiden Kugeln (3) steht.

9. Kugelgewindetrieb nach Anspruch 8, bei dem die Drehachse des Wälzkörpers (24) in einer gemeinsamen Ebene mit den Drehachsen der Kugeln (3) angeordnet sind.

## Claims

1. Ball screw, with a ball-rolling spindle (1) and with a spindle nut (2) arranged thereon, balls (3) being arranged in an endlessly orbitable manner in an endless ball channel (6) delimited by ball grooves (4, 5) of the ball-rolling spindle (1) and of the spindle nut (2), the ball channel (6) having a load portion (7) which is coiled around the ball-rolling spindle (1) and the start and end of which are connected endlessly to one another by means of a load-free return portion (8), in each case at least two and at most four balls (3) being received in a common ball cage (10, 22), the cage pockets (11) of which in each case receive one of the balls (3), a multiplicity of such ball cages being arranged in a row one behind the other, **characterized in that** the ball cage (10, 22) is provided at its axial ends and between mutually adjacent balls (3) in each case with a dish (12, 15) which engages into the ball grooves (4, 5) and which is provided on its sides facing the balls (3) with a concave receptacle (14) for the balls (3), the two dishes (12, 15) at the end of the ball cage (10, 22) being designed, on their sides facing away from one another, as convexly shaped buffers (13).

2. Ball screw according to Claim 1, in which a web (17) which connects all the dishes (12, 15) to one another is arranged on at least one longitudinal side of the ball cage (10, 22).

3. Ball screw according to Claim 2, in which the ball cage (10, 22) is produced from plastic by the injection-moulding method.

4. Ball screw according to Claim 2, in which the web (17) is provided on its sides facing away from one another in each case with a guide boss (18) for guiding the ball cage (10, 22).

5. Ball screw according to Claim 2, in which the spindle nut (2) is provided in the return portion (8), on the longitudinal side of the ball grooves (4, 5), with guide faces (21) for guiding the ball cage (10, 22), the cage web (17) being arranged between these guide faces (21).

6. Ball screw according to Claim 5, in which the guide faces (21) are formed on slot walls (20) of a guide slot (19) which face one another.

7. Ball screw according to Claim 5, in which, in the return portion (8), the balls (3) are held in the cage pockets (11) of the ball cages (10, 22) and have no contact with the ball channel (6).

8. Ball screw according to Claim 1, in which, between mutually adjacent balls (3) of a ball cage (10, 22), a rolling body (24) is arranged, which is in rolling contact with the two balls (3).

9. Ball screw according to Claim 8, in which the axis of rotation of the rolling body (24) is arranged in a common plane with the axes of rotation of the balls (3).

## Revendications

1. Mécanisme d'entraînement à billes, comprenant une vis à billes (1) et un écrou de broche (2) disposé dessus, des billes (3) étant disposées de manière à pouvoir tourner sans fin dans un canal de billes (6) sans fin limité par les gorges de billes (4, 5) de la vis à billes (1) et de l'écrou de broche (2), le canal de billes (6) présentant une portion de charge (7) enroulée autour de la vis à billes (1), dont le début et la fin sont connectés sans fin l'un à l'autre par une portion de retour sans charge (8), à chaque fois au moins deux, et au maximum quatre billes (3) étant reçues dans une cage de billes commune (10, 22), dont les poches de cage (11) reçoivent à chaque fois une des billes (3), une pluralité de ces cages de billes étant disposée en rangée les unes derrière les autres, **caractérisé en ce que** la cage de billes (10, 22) est pourvue au niveau de ses extrémités axiales et entre des billes (3) mutuellement adjacentes à chaque fois d'un plateau (12, 15) venant en prise dans les gorges de billes (4, 5), et pourvu sur ses côtés tournés vers les billes (3) d'un logement concave (14) pour les billes (3), les deux plateaux (12, 15) étant réalisés aux extrémités de la cage de billes (10, 22)sur ses côtés opposés l'un à l'autre sous forme de tampon (13) de forme convexe.

2. Mécanisme d'entraînement à billes selon la revendication 1, dans lequel une nervure (17) est disposée vers au moins un côté longitudinal de la cage de billes (10, 22), laquelle relie tous les plateaux (12, 15) les uns aux autres.

3. Mécanisme d'entraînement à billes selon la revendication 2, dans lequel la cage de billes (10, 22) est fabriquée en plastique dans un procédé de pulvérisation.

4. Mécanisme d'entraînement à billes selon la revendication 2, dans lequel la nervure (17) est pourvue sur ses côtés opposés l'un à l'autre à chaque fois d'une came de guidage (18) pour guider la cage de billes (10, 22).

5. Mécanisme d'entraînement à billes selon la revendication 2, dans lequel les écrous de broche (2) sont pourvus dans la portion de retour (8), du côté longitudinal des gorges de billes (4, 5), de surfaces de guidage (21) pour guider la cage de billes (10, 22), la nervure de cage (17) étant disposée entre ces surfaces de guidage (21).

6. Mécanisme d'entraînement à billes selon la revendication 5, dans lequel les surfaces de guidage (21) sont réalisées sur des parois de rainure (20) tournées l'une vers l'autre d'une rainure de guidage (19).

7. Mécanisme d'entraînement à billes selon la revendication 5, dans lequel, dans la portion de retour (8), les billes (3) sont retenues dans les poches de cage (11) des cages de billes (10, 22) et ne sont pas en contact avec le canal de billes (6).

8. Mécanisme d'entraînement à billes selon la revendication 1, dans lequel un corps de roulement (24) est disposé entre des billes (3) mutuellement adjacentes d'une cage de billes (10, 22), lequel est en contact de roulement avec les deux billes (3).

9. Mécanisme d'entraînement à billes selon la revendication 8, dans lequel l'axe de rotation du corps de roulement (24) est disposé dans un plan commun avec les axes de rotation des billes (3).
